# EUROPEAN PATENT APPLICATION

(11) **EP 3 459 918 A1**
(43) Date of publication of application: **27.03.2019**
(21) Application number: 17193054.8
(22) Date of filing: 26.09.2017
(51) Int. Cl.: C04B 28/00, C04B 28/34, C04B 12/00, C04B 12/02

(54) **EARLY STRENGTH GEOPOLYMER BINDER MATERIAL AND METHOD FOR USING IT**

(71) Applicant: Kajaanin Ammattikorkeakoulu Oy, 87100 Kajaani (FI)
(72) Inventor: Gehör, Seppo, 87100 Kajaani (FI); Kujala, Kauko, 87100 Kajaani (FI); Sarkkinen, Minna, 87100 Kajaani (FI)
(74) Representative: De Tullio, Michele Elio

(57) **Abstract**

A binder mixture comprising the following components:
(a) a Magnesia source selected among: industrial by-product magnesia source having low grade magnesia LGM in terms of MgO<60 wt%; higher grade magnesia source having HGM in terms of MgO>60 wt%; a mixture of LGM and HGM thereof; wherein at least a portion of the magnesia source ranging between 1-100 wt% comprises thermally treated low-grade waste based magnesia material; the amount of a) ranging between 6-66 wt%, preferably between 16-33 wt%;
(b) a Phosphate activator wherein the activator to magnesia weight ratio is comprised between 0,3-0,6, preferably 0,5; the amount of b) ranging between 2-40 wt%;
(c) water, the amount of c) ranging between 5-15 wt%, preferably below 10 wt%.

## Description

### Field of the Invention

The present invention is directed to a usable binder mix and method for repairing of damages (potholes) on the paved roads in cold weather conditions with improved durability.

More particularly the invention relates to a nearly strength Geopolymer Binder Material and to a method for pothole patching in cold conditions.

### Description of the Related Art

The term geopolymer represents a broad range of materials characterized by chains or networks of inorganic molecules. Geopolymers with greatest potential application for transportation infrastructure are composed of alumino-silicate materials that may be used to completely replace portland cement in concrete construction. These geopolymers rely on thermally activated natural materials (e.g., kaolinite clay) or industrial by-products (e.g., fly ash, slag) to provide a source of silicon (Si) and aluminum (Al), which are dissolved in an alkali-activating solution and then polymerize in chains or networks to create the hardened binder. Most geopolymer systems rely on minimally processed natural materials or industrial by-products to provide the binding agents, and thus require relatively little energy and release minimal amounts of CO2 during production. Since portland cement is responsible for upward of 85 percent of the energy and 90 percent of the CO2 attributed to a typical ready-mixed concrete, the energy and CO2 savings through the use of a geopolymer can be significant. The major drawback of current geopolymer technologies is their lack of versatility and cost-effectiveness compared to portland cement systems. Although numerous geopolymer systems have been proposed, most suffer from being difficult to work with, requiring great care in production while posing a safety risk due the high alkalinity of the activating solution (most commonly sodium or potassium hydroxide). In addition, the polymerization reaction is very sensitive to temperature and usually requires that the geopolymer concrete be cured at elevated temperatures, effectively limiting its use to precast applications. It is widely requested to develop geopolymer systems that address the above mentioned technical hurdles, creating a low-embodied energy, low-CO2 binder that has properties similar to portland cement. In addition, it is desirable the development of user-friendly geopolymers that do not require the use of highly caustic activating solutions.

The potholes denote small, typically sharp edged holes in the pavement hampering traffic. They have become more common due to climate change and consequent increasing amount of freeze-thaw cycles. The problems faced while conducting repairs are most serious in cold (-10° ÷ +5°C) weather conditions, such as at the end of winter. Typically, cold placed mix asphalt concrete applying so called "throw and go" method has been used to temporary repairs, requiring usually repeating repairs even on the daily basis. The repair work has commonly been repeated again during warmer summer time when the use of hot mix asphalt is possible.

In the patent application EP2067753 is disclosed a concrete mix comprising hydraulic cementitious material, aggregates and water, in which at least a portion of the aggregates in the total mix are coated externally with a well-bonded polymer layer of at least 1 µm in thickness. Cementitious material could be selected from non-Portland hydraulic cements (for example magnesium phosphate cements) and alkali-activated inorganic binder. Said cementitious material is usually of an inorganic nature, with the ability to set and harden in the presence of water at temperatures in the range 0-100°C. The aggregates are present in an amount of 60-90% by weight of total mix and are selected from the group consisting of sand, gravel, crushed stone and recycled aggregates. The disclosed concrete further comprises admixtures or additives selected from plasticizers, superplasticizers, accelerators, retarders, air-entrainers, pigments, corrosion inhibitors, bonding agents and pumping aids. However in said patent application it is not mentioned the use of an hardening temperature below 0°C; the durability or bonding of the concrete mix with old pavement are not described; and finally it is not disclosed the use of low-grade -MgO as raw material.

The patent application WO2013163009 discloses an aluminosilicate geopolymer composition comprising, the reaction product of: water; a chemical activator selected from the group consisting of an alkali metal salt, an alkali metal base and mixtures thereof; and cementitious reactive material, wherein the cementitious reactive material comprises: a thermally activated aluminosilicate mineral; a calcium sulfoaluminate cement; and a calcium sulfate selected from the group consisting of calcium sulfate dihydrate, calcium sulfate hemihydrate, anhydrous calcium sulfate and mixtures thereof. In said patent application it is not disclosed the use of the geopolymer composition below 0°C, nor the hardening performance below 0°C is disclosed; the durability or bonding of the geopolymer composition with old pavement are not described; and the use of low-grade - MgO as raw material is not mentioned.

The patent application WO2016023073 provides a geopolymer composition including 77-84 wt% fly ash or a fly ash substitute, 4-7 wt% aluminum phyllosilicate, 6-10 wt% alkaline component, and 6-8 wt% water. In said patent application it is not mentioned the
use of the geopolymer composition below 0°C and it is not disclosed how to obtain significant hardening performances below 0°C; the durability or bonding of said geopolymer composition with old pavement are not described. Said patent application doesn't teach the use of low-grade -MgO as raw material and the phosphate as activator.

The need exists of having a binder material which is both cost-efficient and more durable than cold asphalt. In addition, properties like rapid strength development, good bonding with old pavement material, durability and low material costs are required.

### Summary of the Invention

In view of the above the present invention is directed to a binder composition (also called geopolymer binder material) and a method for repairing of damages (potholes) on the paved roads in cold weather conditions in order to provide improved durability of cold placed cold asphalt.

In one embodiment of the present invention, an early strength binder composition (the geopolymer binder material) is formed of a thermally treated low-grade magnesia source material, and optionally partly wollastonite (preferably 1-50 wt% from total weight of low-grade magnesia source material, and obtained by adding a reactant phosphate compound (e.g. KH2PO4).

In one embodiment of the present invention, the aforesaid binder composition is mixed with asphalt concrete/recycled crushed asphalt pavement/virgin, recycled or by-product aggregate to improve durability of the asphalt concrete.

In one embodiment of the present invention, sufficient hardening (4-9 MPa) is obtained in about 3 hours under cold conditions (-10°C).

In the present invention the binder composition acts as a hydraulic material, that is, a material in powder form in the dry state which, when mixed with water, provides plastic mixtures able to solidify and harden with time.

### Brief Description of the Drawings

Further characteristics and advantages of the invention will become more evident on the basis of the detailed description of a preferred embodiment, of geopolymer binder composition and the method for using it, illustrated as a non-limiting example with reference to the attached drawings wherein:
- Figure 1 illustrates how the compressive strength development is sufficient when using low-grade magnesia source already after 3 hours from casting both at temperature 20°C and -10°C (Mix 1- Mix 4) compared to using high grade magnesia (Mix 5-Mix 8). The figure also shows how the compressive strength is higher at -10°C than at 20°C in all mixes.
- Figure 2 shows how the bonding strength to old, wet asphalt pavement of the mixes when using low grade magnesia (Mix 1-Mix 4) is as good as when using higher grade magnesia (Mix 4-Mix 8).
- Figure 3 illustrates how the mass loss after 50 freeze-thaw cycles when using low-grade magnesia (Mix 2- Mix 4) is as good as when using high grade magnesia (Mix 6-Mix 8). The ratio RA/RB describes ratio of the masses measured after freeze-thaw cycles and before the cycles.
- Figure 4 shows temperature range (comprised between from -20,0°C to 20,0°C) and relative humidity range % rH (comprised between 0% to 90,0%) used to perform freeze-thaw cycles to test Mix 1-Mix 8.
- Figure 5 shows a picture with a set of samples of the repair mix used to measure the bonding strength by means of the pull-off procedure.

### Detailed Description of the Invention

With reference to the cited drawings it is provided, in the following, a description of a geopolymer binder composition and the method for using it, according to the present invention. In the following the amounts are indicated as wt%.

The binder composition according to the invention comprises the following components: a) + b) + c), wherein the amount of a) ranges between 6-66 wt%, preferably between 16-33 wt%; the amount of b) ranges between 2-40 wt%; the amount of c) ranges between 5-15 wt%, preferably below 10 wt%.

More specifically said components of the binder composition are:
(a) Magnesia source selected among: industrial by-product magnesia source having low grade magnesia LGM i.e. MgO<60 wt%; higher grade magnesia source having HGM i.e. MgO>60 wt%; a mixture of LGM and HGM thereof; wherein at least a portion of the magnesia source (1-100 wt%) comprises thermally treated low-grade waste based magnesia material.
(b) Phosphate activator (preferably KH2PO4), wherein the activator to magnesia weight ratio is comprised between 0.3-0.6, preferably 0.5.
(c) Water.

The binder composition has the capacity to harden at the temperature as low as -10°C. The magnesia sources can be:
- low grade magnesia (LGM i.e. MgO<60 wt%) source, for example industrial by-product magnesia, such as magnesite-talc tailings derived from talc mine, which has been calcined at the temperature of 530°C or above; produced synthetically from seawater or lake brines, or from chemical precipitation;
- high grade magnesia (HGM i.e. MgO>60 wt%) source: reactive or dead burned. HGM produced naturally from the calcination (700-2000°C) of magnesium based minerals (usually magnesite and dolomite), or synthetically produced from seawater, well and lake brines.

A portion (0-50 wt%) of the magnesia (ref. component a) can be replaced by wollastonite added in amounts of 0-15 wt% from total wt% of dry components.

A preferred binder composition comprises:
a) Magnesia source: industrial by-product magnesia (low grade LGM i.e. MgO<60 wt%), for example, magnesite-talc tailings derived from talc mine, which has been calcined at the temperature of 530°C or above, or other higher grade magnesia (HGM i.e. MgO>60 wt%) source: reactive or dead burned, or mixture of LGM and HGM. Dosage: 6-66 wt%, preferably between 16-33 wt%. LGM:HGM range can be between 1:99-99:1; Wollastonite, 0-15 wt%, preferably 5-10 wt% from total weight of MgO-source and wollastonite;
b) Phosphate activator (MKP) selected among those materials that can be considered phosphate sources; preferred are potassium dihydrogen phosphate (KH2PO4), phosphoric acid, monopotassium phosphate, ammonium dihydrogen phosphate, sodium triphosphate or b-tricalciumphosphate. Dosage: activator to magnesia weight ratio of 0.3-0.6, preferably 0.5;
c) Water. Dosage: 5-15 wt% preferably below 10 wt%.

The binder composition according to the invention is advantageously mixed with suitable aggregates to obtain a repair concrete mix for use to repair potholes.

The aggregates can be selected among: ready mixed asphalt (mix of bitumen and aggregate), crushed reclaimed asphalt pavement, RAP (removed and/or reprocesses pavement material containing asphalt and aggregates), plain virgin (typically e.g. granite), recycled or waste-based (e.g. ferrochrome slag from steel production) graded aggregate between 0 and 16 mm. The expected amount of aggregates is comprised between 10-90 wt%, preferably between 50-75 wt% with respect to repair mix composition.

The binder composition of the invention can be improved by adding to it one or more additives.

The additives are selected among: superplasticizers (e.g. polycarboxylates, melamine polymer or lignosulphonate 0,1-2 wt%; fibers (e.g. polypropylene, basalt or steel fibers) 0.1-1 wt%; bitumen 0.1-0.3 wt%; crushed recycled tyre rubber 1-2 wt%; boric acid 0.5-3 wt%; polyethyleneglicol 2-5 wt%; coal fly ash or steel slag 1-20 wt%. All the amounts are in respect of magnesia source.

Additional additives are selected in the group of plasticizers (e.g. polycarboxylates, melamine polymer or lignosulphonate), retarders (typically e.g. boric acid or ferrosulphate 1-5 wt%), inorganic pigments (e.g. cobalt blue or iron oxide, chrome oxide or titan oxide pigments 0-5 wt% (i.e. microsilica i.e. amorphous polymorph of silicon dioxide 0-5 wt%); organic and/or inorganic fibers (e.g. polypropylene, basalt, bauxite, steel fibers) 0.1-1 wt%; bitumen 0.1-0.3 wt% of magnesia source; crushed recycled tyre rubber 1-2 wt%, boric acid 0.5-3 wt% of MgO, polyethyleneglycol 2-5 wt% or coal fly ash or steel slag 1-20 wt%; all the amounts are in respect of magnesia source.

A repair concrete mix according to the invention is obtained by combining the binder composition in an amount of 10-90 wt% by weight of total mix with 90-10 wt% of at least one material selected in the group of: asphalt concrete, crushed or natural aggregate (with grading 0-16 mm used in production of asphalt concrete), or waste based aggregate such as ferrochrome slag (grading 0-16 mm derived as by-product from steel manufacturing) ready mixed asphalt (mix of bitumen and aggregate), crushed reclaimed asphalt pavement, RAP (removed and/or reprocesses pavement material containing asphalt and aggregates), or plain virgin, recycled or waste-based (e.g. ferrochrome slag) graded aggregate. The preferred amount is preferably considered between 50-75 wt%.

Min requirement: totally 10 wt% of dry components comprising hydraulic material, magnesia source, activator. In addition water is required 5 wt% from binder component. Optional components: additives, admixtures and aggregates.

A method for the preparation and use of the binder composition and the repair concrete mix is detailed in the following.

Method for preparing the binder composition comprises the following steps:
- the dry constituents (all the components except water i.e. magnesia source, activator and asphalt, aggregates and additives) are premixed mechanically before application. Alternatively, other constituents (all the components except asphalt concrete, RAP, natural or crushed virgin or recycled aggregate and water i.e. the binder component, additives and admixtures) are premixed and added to asphalt/aggregate component and water later on site just before application;
- premixed binder constituents can be mixed with the aggregate/asphalt concrete/RAP with the chosen dosage. Higher dosage (>10 wt%) of binder material component is recommended to be used under colder conditions (below 0°C);
- water is added and mixed mechanically just before patching.

The method for repairing damages of the pavement of roads, in particular for repairing potholes with the composition of the invention comprises the following steps:
(i). The pothole is cleaned from loose water, ice and debris e.g. with brush or air pressure. It is recommended that the edges of the pothole are removed from loose old asphalt material before patching.
(ii). The dry constituents (magnesia source, activator and asphalt, aggregates, admixtures and additives) except water are premixed mechanically before application. Alternatively, other constituents (magnesia source, activator and admixtures and additives) except asphalt or aggregate and water are premixed and added to asphalt/aggregate component and water later on site just before application. Premixed binder constituents can be mixed with the aggregate/asphalt concrete/RAP with the chosen dosage. Higher dosage of binder material component is recommended to be used under colder conditions (below 0°C).
(iii). Water is added and mixed mechanically just before patching.
(iv). The pothole is filled with the patching material immediately after water addition and mixing.
(v). The patching material is applied and compacted into the pothole manually e.g. with a shovel, or sprayed with a suitable equipment.
(vi). The filled patch surface is finished e.g. with a shovel.
(vii). The patched pothole can be driven over after 10 to 30 min depending on the used mix ratios and temperature conditions.

The binder material can be used when the temperature is between 20°C and -10°C. It is recommended to avoid patching during heavy rain or strong direct sunshine. The preferred temperature is between 10°C and -5°C.

When mixed according to the process of the invention, the repair concrete mix shows the following properties:
- it achieves a compressive strength of at least 3.5 MPa within 3 hours, at temperature - 10°C;
- it achieves a bonding strength of at least 1.0 MPa to old wet asphalt pavement;
- the loss of mass after 50 freeze-thaw cycles is less than 0.95 determined as a ratio between mass after 50 freeze-thaw cycles and mass before freeze-thaw cycles;
- use of low-grade magnesia source is economical compared to higher grade magnesia sources;
- recycling of waste based low-grade magnesia reduces amount of wastes and landfill providing environmental benefit;
- use of low-grade magnesia source calcined at low temperatures (below 700°C) saves energy compared to magnesia raw materials calcined at higher temperatures (above 700°C);
- low-grade talc-magnesite based magnesia source from talc mine does not require crushing or grinding unlike HGM produced from virgin magnesite or dolomite.

In view of the above, the composition according to the invention can be used for other applications such as stabilization and strengthening of weak, contaminated and permeable soils (e.g. road structures, mine tailings).

It is herein considered as weak soil a land area with high organic content often found near the mouths of rivers, along the perimeters of bays, and beneath swamps or lagoons.

It is herein considered as contaminated soil a land area containing petroleum hydrocarbons and/or monocyclic aromatic hydrocarbons and/or organochlorine compounds and/or polycyclic aromatic hydrocarbons and/or heavy metals and/or toxic chemical compounds. It is herein considered as permeable soil a land area wherein gases, liquids or plant roots easily penetrate or pass through one or more layers of said soil.

In a preferred embodiment said composition can be used for stabilization and strengthening of road structures such as highway, pathway, walkway structure, bridges, pavements.

In an additional preferred embodiment said composition can be used for stabilization and strengthening of mine tailings.

The following examples are given to illustrate the invention and are not considered as limiting its scope.

### Example 1

1. Dry constituents (LGM based from magnesite-talc tailings derived from talc mine, calcined at the temperature of 650°C 30 wt%, wollastonite type W325 from Nordkalk 5 wt%, and potassium dihydrogen phosphate 15 wt%, and ready mixed cold asphalt mix 50 wt% (from storage pile of the local asphalt concrete station) are measured in a given weight ratios and stored in a bag or bucket.
2. The water is stored in a canister.
3. The components are transported to the road pavement site.
4. The dry constituents and water (measured by using the guided dosage) are combined and mixed in a bucket by using for example a drill machine mixer.
5. The ready mixed repair concrete is immediately placed into the pothole.
6. The repair concrete is compacted by, for example, a steel or rubber spatula.
7. The pothole repair is ready to drive over after 10-30 min depending on the conditions.

### Example 2

1. Dry binder constituents (LGM based from magnesite-talc tailings derived from talc mine, calcined at the temperature of 650°C 30 and potassium dihydrogen phosphate) are measured in a given weight ratio 2:1 and stored in a bag or bucket.
2. The water is stored for example in a canister.
3. The cold premixed asphalt concrete from the storage pile of the local asphalt concrete station is stored and transported separately to the road pavement repair site for example in a lorry.
4. The components are transported to the road pavement site.
5. The dry constituents, premixed cold asphalt concrete and water are measured by following the guided dosages (binder 42 wt% and asphalt 58 wt%) and mixed in a bucket, for example, by using a drill machine mixer.
6. The repair concrete is immediately placed into the pothole.
7. The repair concrete is compacted with a steel or rubber spatula.
8. The pothole repair is ready to drive over after 10-30 min depending on the conditions.

Example of repair mix ratios containing geopolymer binder composition:

| **COMPONENTS (wt%)** | **Mix 1** | **Mix 2** | **Mix 3** | **Mix 4** | **Mix 5** | **Mix 6** | **Mix 7** | **Mix 8** |
|---|---|---|---|---|---|---|---|---|
| Low-grade MgO | 30 | 28 | 22 | 28 | 0 | 0 | 0 | 0 |
| High-grade MgO | 0 | 0 | 0 | 0 | 10 | 14 | 16 | 28 |
| Potassium dihydrogen phosphate | 15 | 14 | 11 | 14 | 10 | 14 | 8 | 14 |
| Wollastonite | 5 | 0 | | 0 | 10 | 14 | 0 | 0 |
| Asphalt | 50 | 58 | | 56 | 70 | 58 | | 56 |
| Recycled asphalt pavement | 0 | 0 | 67 | 0 | | | 76 | 0 |
| Crushed tyre rubber | 0 | 0 | 0 | 1,9 | 0 | 0 | 0 | 1,9 |
| *Total wt%* | *100* | *100* | *100* | *100* | *100* | *100* | *100* | *100* |
| Water | 13 | 13 | 11 | 13 | 7 | 5 | 10 | 10 |

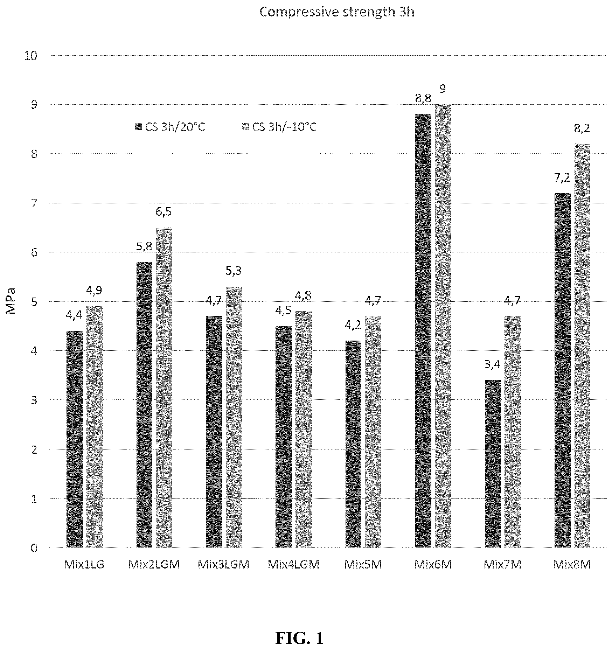

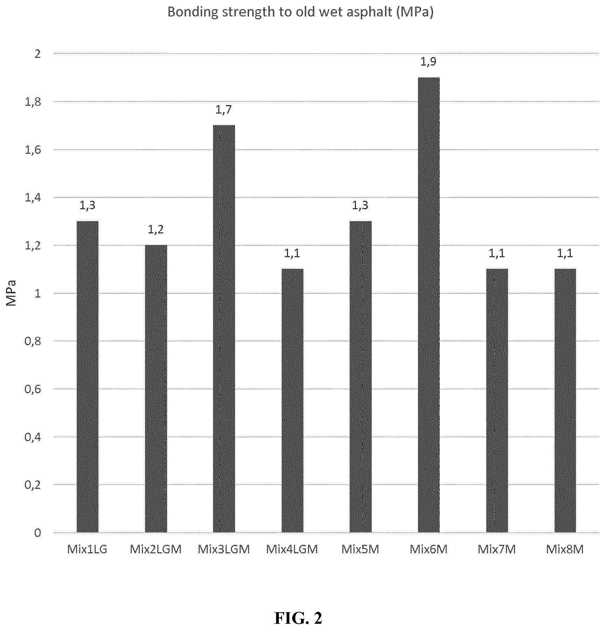

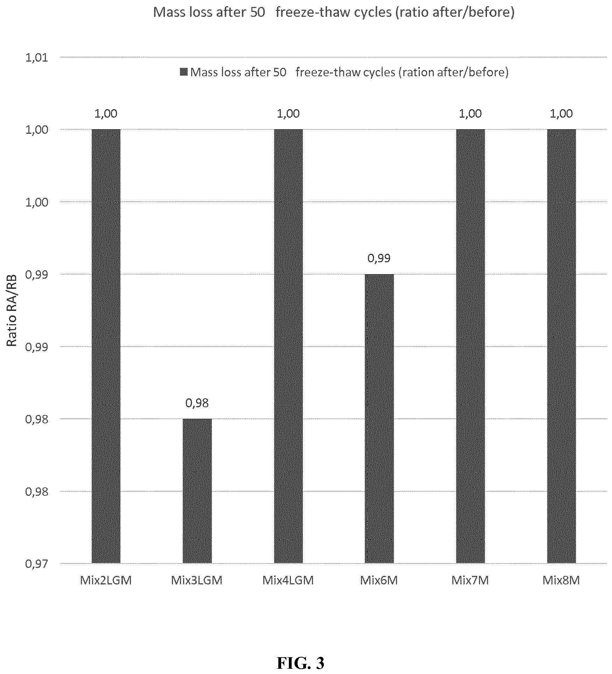

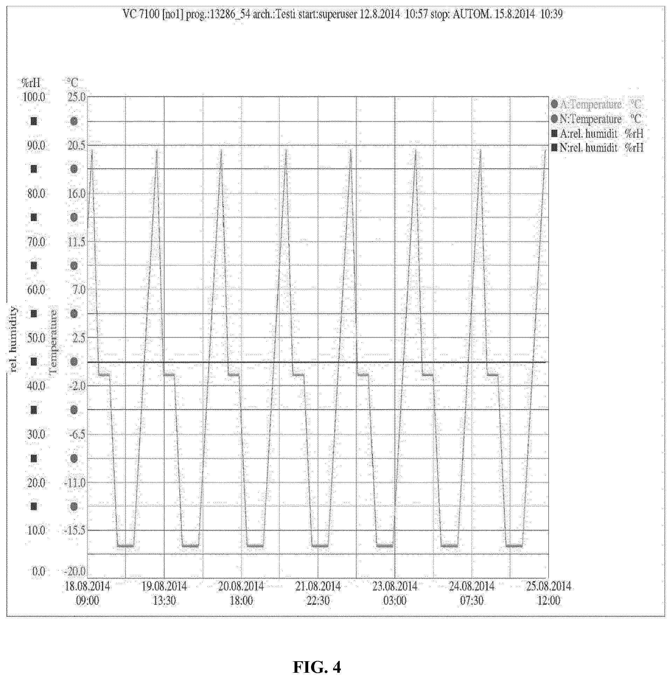

The procedure for the preparation of the test mixtures (Mix 1-Mix 8), referring to the test results presented in Figure 1-3, includes the following steps:
1. All the dry constituents (MgO, phosphate, wollastonite. asphalt, RAP, and tyre rubber) were measured and mixed with a drill-machine mixer ca. 5 minutes.
2. Water was added into the dry mix and mixed further until the mix was homogenous, about 2 minutes.
3. The mix was immediately placed into cube moulds 100x100x100 mm for compressive strength tests (Figure 1) and for the freeze-thaw resistance tests (Figure 3). The test cubes were stored without cover at room temperature (20°C) or placed immediately into the freezer (-10°C).
4. Compressive strength was tested by using the universal compressive testing machine.
   The cubes stored in the freezer were not frozen after 3 hours.
5. The test cubes for the freeze-thaw testing were stored at the temperature of 20°C for 7 days before the freeze-thaw testing.
6. The weight of the test cubes was measured before the test (RB) and after 50 freeze-thaw cycles (RA). The mass loss was determined by using the ratio RA/RB.
7. The freeze-thaw cycles are presented in Figure 4. The temperature range was between 20°C and -20°C and relative humidity between 0 %rH and 90 %rH.

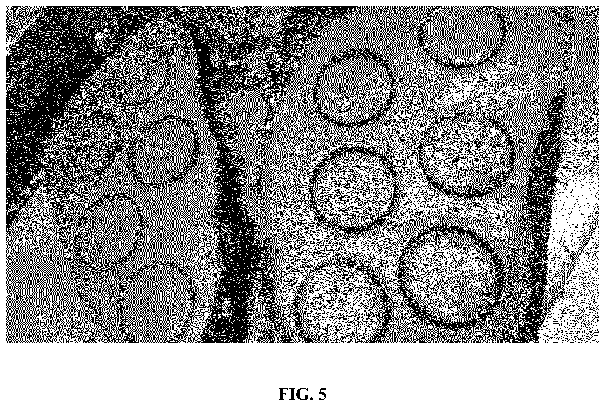

The bond strength with the old pavement was defined by placing the mix on the old asphalt pavement pieces, which were roughly cleaned by brush from loose debris and impurities. The surface of the asphalt was wet when placing the repair mix. The bonding strength was measured by using the pull-off procedure (Figure 5) and equipment digital pull-of tester (16 kN capacity) by Matest.

The subject-matter of the invention is susceptible of numerous modifications and variations, without departing from the inventive concept as expressed in the accompanying claims.

All the above-described details may furthermore be replaced with other technically equivalent elements, and the materials may be different according to the single needs, without departing from the scope of protection of the present invention.

Although the present invention has been described with particular reference to the accompanying drawings, the reference numbers used in the description and in the claims are used to improve the intelligibility of the invention and do not represent any limitation to the scope of protection claimed.

## Claims

1. A binder mixture comprising the following components:
(a) a Magnesia source selected among: industrial by-product magnesia source having low grade magnesia LGM in terms of MgO<60 wt%; higher grade magnesia source having HGM in terms of MgO>60 wt%; a mixture of LGM and HGM thereof; wherein at least a portion of the magnesia source ranging between 1-100 wt% comprises thermally treated low-grade waste based magnesia material; the amount of a) ranging between 6-66 wt%, preferably between 16-33 wt%;
(b) a Phosphate activator wherein the activator to magnesia weight ratio is comprised between 0,3-0,6, preferably 0,5; the amount of b) ranging between 2-40 wt%;
(c) water, the amount of c) ranging between 5-15 wt%, preferably below 10 wt%.

2. A binder mixture according to claim 1 wherein the magnesia sources is selected in the group of:
- low grade magnesia source: industrial by-product magnesia, magnesite-talc tailings derived from talc mine, which has been calcined at the temperature of 530°C or above; produced synthetically from seawater or lake brines, or from chemical precipitation;
- high grade magnesia source: reactive or dead burned; produced naturally from the calcination conducted in the range of 700-2000°C of magnesium based minerals, or synthetically produced from seawater, well and lake brines.

3. A binder mixture according to claim 2 wherein the high grade magnesia source is selected among magnesite and dolomite.

4. A binder mixture according to any one of claims 1-3 wherein a portion ranging between 0-50 wt% of the magnesia of the component a) is replaced by wollastonite; said wollastonite being added in amounts of 0-15 wt% with respect to the total wt% of a) and b).

5. A binder mixture according to any one of claims 1-4 wherein the a) component is selected among:
- the LGM source is magnesite-talc tailings derived from talc mine, which has been calcined at the temperature of 530°C or above,
- the HGM is: reactive or dead burned,
- mixtures of LGM and HGM in a dosage ranging between: 6-66 wt%, preferably between 16-33 wt%.

6. A binder mixture according to either of claims 4-5 wherein wollastonite is in amounts ranging between 0-15 wt%, preferably 5-10 wt% from total weight of MgO-source.

7. A binder mixture according to any one of claims 1-6 wherein the b) component is selected among: potassium dihydrogen phosphate (KH2PO4), phosphoric acid, monopotassium phosphate, ammonium dihydrogen phosphate, sodium triphosphate or b-tricalciumphosphate in a dosage: activator to magnesia weight ratio of 0.3-0.6, preferably 0.5.

8. A binder mixture according to any one of claims 1-7 wherein water is added in a dosage ranging between 5-15 wt%, preferably below 10 wt%.

9. A binder mixture according to any one of claims 1-8 further comprising aggregates selected among: ready mixed asphalt (mix of bitumen and aggregate), crushed reclaimed asphalt pavement, RAP removed and/or reprocesses pavement material containing asphalt and aggregates, plain virgin (typically e.g. granite), recycled or waste-based (e.g. ferrochrome slag from steel production) graded aggregate between 0 and 16 mm; the amount of aggregates being comprised between 10-90 wt%, preferably between 50-75 wt% with respect to the binder mixture composition.

10. A binder mixture according to any one of claims 1-9 further comprising additives selected among: superplasticizers, in particular polycarboxylates, melamine polymers or lignosulphonates in amounts ranging between 0,1-2 wt%; fibers, in particular polypropylene, basalt or steel fibers in amounts ranging between 0,1-1 wt%; bitumen in amount ranging between 0,1-0,3 wt%; crushed recycled tyre rubber in amount ranging between 1-2 wt%; boric acid in amount ranging between 0,5-3 wt%; polyethyleneglicol in amount ranging between 2-5 wt%; coal fly ash or steel slag in amounts ranging between 1-20 wt%; all the amounts being in respect of the magnesia source.

11. A binder mixture according to any one of claims 1-10 further comprising additives selected in the group of plasticizers: polycarboxylates, in particular melamine polymers or lignosulphonates; retarders, in particular boric acid and ferrosulphates in amounts 1-5 wt%; inorganic pigments, in particular cobalt blue, iron oxide, chrome oxide and titan oxide in amounts 0-5 wt%; microsilica, in particular, amorphous polymorph of silicon dioxide in amounts 0-5 wt%; organic and/or inorganic fibers, in particular polypropylene, basalt, bauxite, steel fibers, in amounts 0.1-1 wt%; bitumen in amounts 0.1-0.3 wt% of magnesia source; crushed recycled tyre rubber in amounts 1-2 wt%; boric acid in amount 0.5-3 wt%; polyethyleneglycol in amount 2-5 wt%; coal fly ash or steel slag I amounts 1-20 wt%; all the amounts being in respect of magnesia source.

12. A repair concrete mix comprising the binder composition according to any one of claims 1-11 in an amount of 10-90 wt% by weight of total mix with 90-10 wt% or preferably 50-75 wt%, of at least one material selected in the group of: asphalt concrete, crushed or natural aggregate with grading 0-16 mm used in production of asphalt concrete, or waste based aggregate such as ferrochrome slag with grading 0-16 mm derived as by-product from steel manufacturing; ready mixed asphalt, comprising a mixture of bitumen and aggregate, crushed reclaimed asphalt pavement, RAP (removed and/or reprocesses pavement material containing asphalt and aggregates), or plain virgin; recycled or waste-based graded aggregate, in particular ferrochrome slag.

13. Method for repairing damages of the pavement of roads, in particular for repairing potholes with the mix composition according to any one of claims 1-12 comprising the following steps:
- clean a pothole from loose water, ice and debris e.g. with brush or air pressure;
- premix mechanically the dry components a) and b) alone or with the additives and/or aggregates;
- add water and mix mechanically just before patching;
- fill the pothole with the repair concrete mix immediately after water addition and mixing;
- compact the repair concrete mix into the pothole and let to dry and harden.

14. Use of the composition according to any one of claims 1-12 for repairing damages of the pavement of roads.

15. Use of the composition according to any one of claims 1-12 for stabilization and strengthening of weak, contaminated and permeable soils.
